# EUROPÄISCHE PATENTSCHRIFT

(11) **EP 0 646 077 B1**
(45) Veröffentlichungstag und Bekanntmachung des Hinweises auf die Patenterteilung: **11.09.1996**
(21) Anmeldenummer: 93914679.1
(22) Anmeldetag: 19.06.1993
(51) Int. Cl.: B60T 8/88, H01H 47/00

(54) **SCHALTUNGSANORDNUNG ZUR ÜBERWACHUNG EINER INDUKTIVEN SCHALTUNG**
CIRCUITRY FOR MONITORING AN INDUCTIVE CIRCUIT
CIRCUIT DE SURVEILLANCE D'UN CIRCUIT INDUCTIF

(30) Priorität: 27.06.1992 DE 4221196
(43) Veröffentlichungstag der Anmeldung: 05.04.1995
(73) Patentinhaber: ITT Automotive Europe GmbH, D-60488 Frankfurt am Main (DE)
(72) Erfinder: ZYDEK, Michael, D-6303 Langgöns (DE); FEY, Wolfgang, D-6272 Niedernhausen (DE); ZINKE, Olaf, D-6238 Hofheim (DE)
(74) Vertreter: Blum, Klaus-Dieter, Dipl.-Ing.
(86) Internationale Anmeldenummer: EP9301569
(87) Internationale Veröffentlichungsnummer: WO9400322

(56) Entgegenhaltungen:
- EP-A- 0 358 887
- DE-A- 4 010 198
- US-A- 3 838 891
- US-A- 4 109 234

## Beschreibung

Die Erfindung bezieht sich auf eine Schaltungsanordnung zur Überwachung einer induktiven Schaltung, die als Bestandteil einer signalverarbeitenden Schaltung oder als Zusatz zu dieser Schaltung ausgebildet und über eine hochohmige Eingangs- oder Filterschaltung an die signalverarbeitende Schaltung angeschlossen ist und die beim Eintreten vorgegebener Bedingungen und/oder in vorgegebenen Intervallen einen Testzyklus zur Bestimmung der Induktivität der zu überwachenden Schaltung, einschließlich der Filterschaltung (3) auslöst.

Eine derartige Schaltungsanordnung ist aus der EP 0 358 887 Al bekannt. Nach dieser Schrift wird mit Hilfe einer Zeitdifferenzmeßeinrichtung die Laufzeit eines Prüfsignals, das die zu überwachende induktive Schaltung durchläuft, überwacht und auf korrekte Dauer ausgewertet. Hierzu wird die Zeitdifferenz der Laufdauer eines über die Induktivität und über ein Zeitglied zu der Zeitdifferenzmeßeinrichtung gelangenden Signals mit dem direkt über ein gleiches Zeitglied zu der Meßeinrichtung geführten Signal verglichen.

Solche Schaltungsanordnungen sind insbesondere zum Erkennen eines Kurzschlusses in dem induktiven Meßwertaufnehmer eines Radsensors geeignet. Liegt der Kurzschluß in der Zuleitung zu diesem Meßwertaufnehmer vor oder in dessen Eingangsschaltung oder Filterschaltung wird er ebenfalls von der Überwachung erfaßt. Eine Leitungsunterbrechung wird gleichfalls erkannt. Solche Sensoren, die z.B. für die Antiblockiersysteme oder Antriebsschlupfregelsysteme von Kraftfahrzeugen benötigt werden, sind sicherheitskritische Bauteile und müssen daher ständig auf Funktionsfähigkeit, Kurzschluß oder Leitungsunterbrechung überwacht werden. Bei einer niederohmigen Eingangs- oder Filterschaltung läßt sich ein Kurzschluß durch Bestimmen des ohmschen Widerstandes zwischen einem Ausgang der Filterschaltung und Masse relativ leicht ermitteln. Bei einer hochohmigen Filterschaltung führt diese Methode in der Praxis nicht zum Ziel, weil der ohmsche Innenwiderstand des induktiven Schaltkreises klein im Vergleich zu den Widerständen in der Filter- oder Eingangsschaltung ist. Der am Ausgang der Filterschaltung meßbare Spannungsabfall beim Einprägen eines Stromes ändert sich daher im Falle eines Kurzschlusses nur so wenig, daß keine zuverlässige Auswertung der Meßergebnisse möglich ist.

Der vorliegenden Erfindung liegt die Aufgabe zugrunde, eine Schaltungsanordnung der eingangs genannten Art zu entwickeln, die einfach aufgebaut ist, keine zusätzlichen Anschlüsse benötigt und mit der auch bei Anschluß des induktiven Schaltkreises über einen hochohmigen Filter- bzw. Eingangsschaltkreis eine zuverlässige Erkennung eines Kurzschlusses oder einer Leitungsunterbrechung möglich ist.

Es hat sich gezeigt, daß diese Aufgabe mit der in Anspruch 1 beschriebenen Schaltungsanordnung zu lösen ist, deren Besonderheit darin besteht, daß zu Beginn des Testzyklus einer der beiden Ausgänge der Filterschaltung an Masse, der zweite Ausgang für eine vorgegebene Zeitspanne an eine Spannungsquelle angeschaltet werden und daß die Induktivität aus dem Potentialverlauf an einem zweiten Ausgang der Filterschaltung ermittelt wird.

Einige vorteilhafte Ausführungsbeispiele der Erfindung sind in den Unteransprüchen beschrieben.

Es ist zweckmäßig, wenn die vorgegebene Zeitspanne mindestens der Einschwingzeit der zu überwachenden induktiven Schaltung, einschließlich der Filterschaltung, entspricht. Nach Beendigung der vorgegebenen Zeitspanne und Abschaltung der Spannungsquelle wird dann der Potentialverlauf an dem zweiten Ausgang zur Ermittlung der Induktivität ausgewertet.

Es kommen auch symmetrisch aufgebaute Filterschaltungen in Frage, die je einen hochohmigen Serienwiderstand in den von der induktiven Schaltung zu der signalverarbeitenden Schaltung führenden Leitungen, einen beide Ausgänge der Filterschaltung verbindenden Kondensator und je einen eine der Ausgänge der induktiven Schaltung bzw. Eingänge der Filterschaltung mit Masse verbindenden Eingangskondensator aufweist.

Zur Vereinfachung der Signalauswertung kann einer solchen Filterschaltung über einen Spannungsteiler, der einerseits an eine Gleichspannungsquelle, an der anderen Seite an Masse angeschlossen ist, ein Gleichspannungspotential vorgegeben werden. Bei einer Leitungsunterbrechung tritt dann eine (erhöhte) Potentialdifferenz an den beiden Eingängen der signalverarbeitenden Schaltung auf. Allerdings läßt sich mit der erfindungsgemäßen Schaltungsanordnung eine Leitungsunterbrechung auch aus der damit einhergehenden Änderung der Induktivität der zu überwachenden Schaltung erkennen.

Ein weiteres Ausführungsbeispiel der Erfindung besteht darin, daß die Überwachungsschaltung unmittelbar nach oder annähernd gleichzeitig mit dem Abschalten der Spannungsquelle durch ein kurzes Anlegen dieses zweiten Ausgangs an Masse den beide Ausgänge verbindenden Kondensator entlädt. Die Auswertung des Potentialverlaufs während des Testzyklus zur Bestimmung der Induktivität der induktiven Schaltung wird in diesem Fall erheblich erleichtert.

Weitere Merkmale, Vorteile und Anwendungsmöglichkeiten der Erfindung gehen aus der folgenden Darstellung weiterer Details anhand der beigefügten Abbildungen hervor.

Es zeigen
- Fig. 1: das elektrische Ersatzbild einer induktiven Schaltung der hier in Rede stehenden Art sowie ein Ausführungsbeispiel eines Filter- bzw. Eingangsschaltung zwischen der induktiven Schaltung und einer signalverarbeitenden Schaltung,
- Fig. 2: in einer etwas anderen, für die Erklärung der Wirkungsweise günstigeren Anordnung die Schaltung nach Fig. 1 in Verbindung mit einer Überwachungsschaltung nach der Erfindung und
- Fig. 3: den Signalverlauf an mehreren Stellen in der Schaltungsanordnung nach Fig. 2.

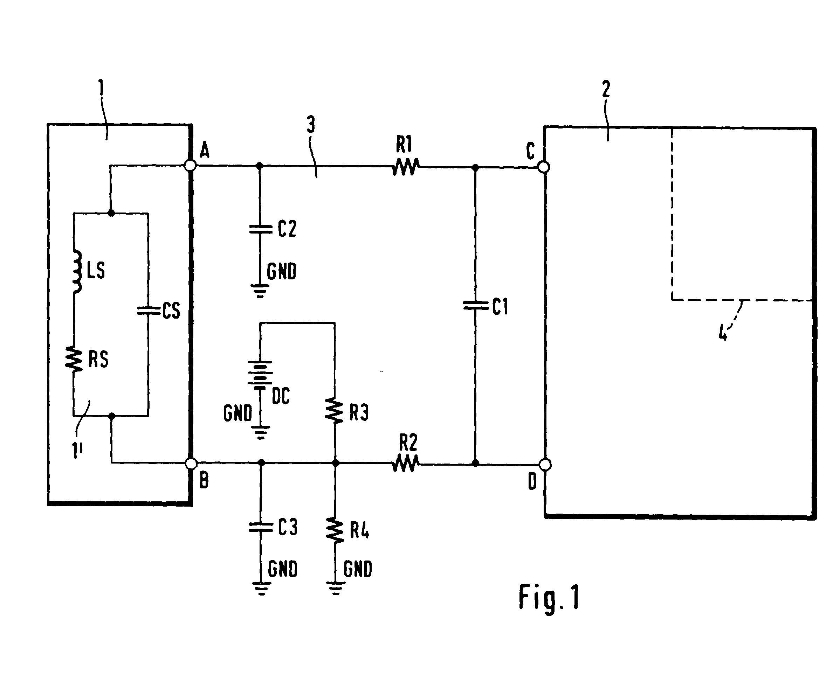

In Fig. 1 sind die Ersatzschaltung 1' eines induktiven Meßwertaufnehmers 1, eine signalverarbeitende Schaltung 2 und eine hochohmige Eingangs- oder Filterschaltung 3 wiedergegeben. Die signalverarbeitende Schaltung 2 enthält - gestrichelt dargestellt - als Bestandteil dieser Schaltung eine Überwachungsschaltung 4, die Testzyklen zur Bestimmung der Induktivität der induktiven Schaltung 1 auslöst und die gewonnenen, an den Eingangs-Anschlüssen C und D der signalverarbeitenden Schaltung 2 anstehenden Signale auswertet.

Die Ersatzschaltung 1' der zu überwachenden induktiven Schaltung 1 besteht aus der Reihenschaltung eines ohmschen Widerstandes RS und einer Induktivität LS. Zu dieser Reihenschaltung ist ein Kondensator CS parallel geschaltet. Es handelt sich bei dieserrinduktiven Schaltung beispielsweise um den induktiven Meßwertaufnehmer eines Radsensors, mit dem die Drehbewegung eines Rades gemessen werden kann. Solche Meßwertaufnehmer enthalten Spulen, in denen, wenn sich das Rad dreht, eine Wechselspannung induziert wird, deren Frequenz (und Amplitude) die Drehbewegung wiedergeben. Das an den Klemmen A,B anliegende Ausgangssignal eines solchen Sensors wird über die Filterschaltung 3, die in der Regel am Ende einer längeren elektrischen Leitung sitzt, zu der signalverarbeitenden Schaltung 2 übertragen und dort aufbereitet sowie ausgewertet.

Die Filterschaltung 3 nach Fig. 1 ist symmetrisch aufgebaut. In den beiden Zuleitungen ist jeweils ein Serienwiderstand R1,R2 eingefügt, der im Vergleich zu dem Innenwiderstand RS des Sensors hochohmig ist. Ein Kondensator C1 verbindet die beiden Ausgänge C,D der Filterschaltung 3. An der Sensor-Anschlußseite der Filterschaltung 3 sind zwei weitere, gegen Masse geschaltete Kondensatoren C2,C3 vorhanden. Die Kondensatoren C1,C2,C3 bilden zusammen mit den ohmschen Widerständen der Filterschaltung und dem Innenwiderstand der induktiven Schaltung einen Tiefpaß.

Des weiteren enthält die Filterschaltung 3 nach Fig. 1 einen Spannungsteiler mit den Widerständen R3,R4. Dieser Spannungsteiler ist einerseits an den Pluspol der Versorgungsspannungsquelle V_{CC} und andererseits an Masse GND angeschlossen.

Die ohmschen Widerstände R1,R2 sind zumindest annähernd gleich. Im Ruhezustand, wenn in dem Sensor 1 keine Spannung induziert wird, herrscht an den Klemmen A,B,C,D annähernd gleiches Potential, da der Eingang C,D der signalverarbeitenden Schaltung 2 sehr hochohmig ist. Eine Leitungsunterbrechung in dem Sensor 1 oder in der Anschlußleitung bzw. in dem Eingangsschaltkreis 3 läßt sich mit Hilfe der signalverarbeitenden Schaltung 2 feststellen.

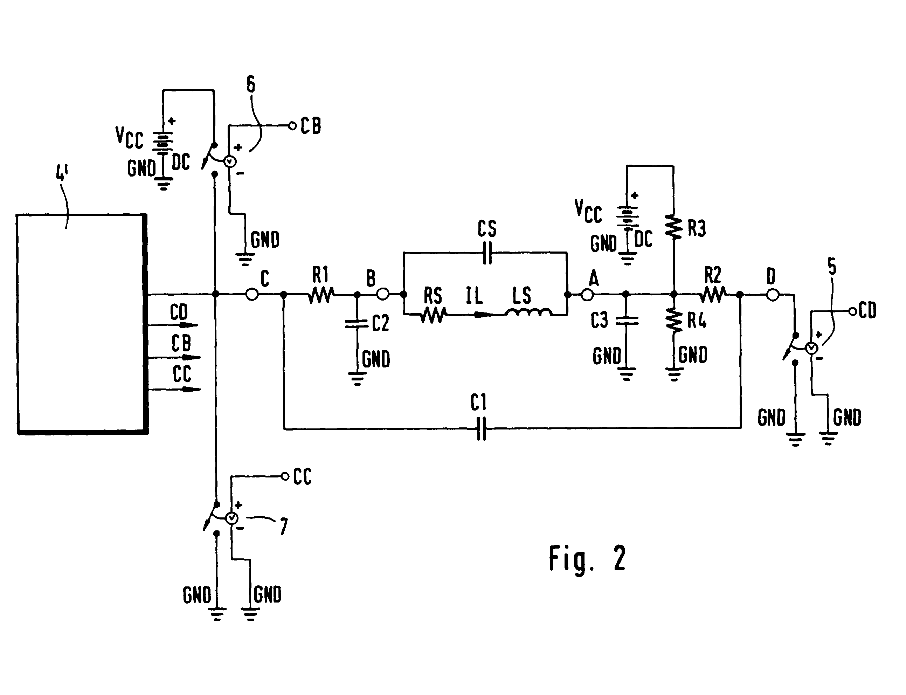

Zur Erläuterung der Arbeitsweise der erfindungsgemäßen Schaltungsanordnung dient Fig. 2, die in etwas anderer Darstellung die Schaltung nach Fig. 1 wiedergibt und in der zusätzlich zum Verständnis der Wirkungsweise der Testzyklen drei Transistorstufen 5,6,7 oder Halbleiterschalter eingezeichnet sind. Diese Schalter 5,6,7 gehören zu der Überwachungsschaltung 4 (siehe Fig. 1). Die Überwachungsschaltung 4 ist in der Darstellung nach Fig. 2 quasi in eine Auswerte- und eine Steuerschaltung 4' und in die Halbleiterschalter 5,6,7 zerlegt. Die zu den Steuereingängen der Schalter 5,6,7 führenden Ausgänge der Auswerte- und Steuerschaltung 4' sind in Fig. 2 ebenfalls angedeutet und mit CB,CC,CD bezeichnet. Im übrigen wurden in Fig. 1 und Fig. 2 die gleichen Bezeichnungen für gleiche Teile und gleiche Anschlüsse gewählt.

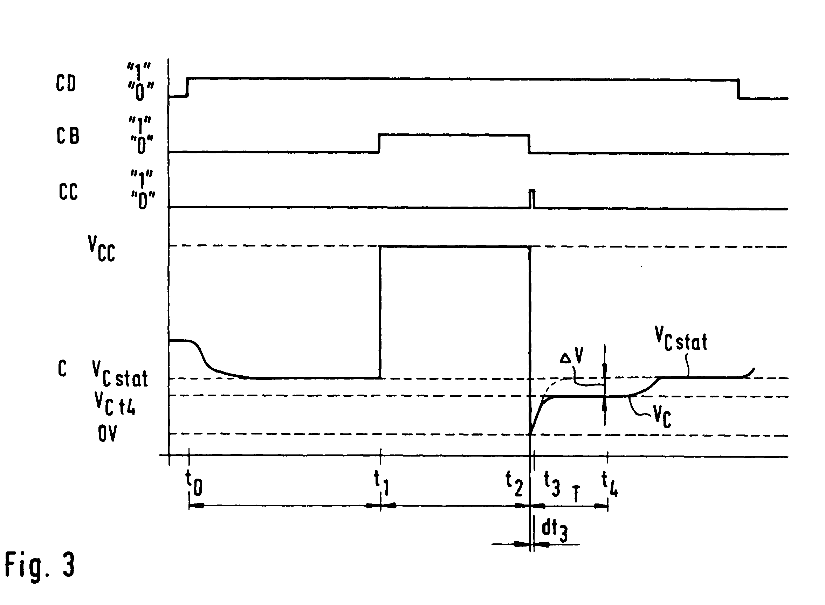

Die Wirkungsweise eines Ausführungsbeispiels der erfindungsgemäßen Schaltungsanordnung wird im folgenden anhand der Fig. 2 in Verbindung mit den Zeitdiagrammen nach Fig. 3 erläutert.

Die Überwachung wird beispielsweise nach jedem Einschalten der Zündung des Fahrzeugs durchgeführt. Zu diesem Zeitpunkt wird in dem induktiven Meßwertaufnehmer, dessen Ersatzschaltung 1' dargestellt ist, keine Spannung induziert, weil die Räder zunächst noch stillstehen. Bei einem langsamen Rollen des Fahrzeugs ändert sich an diesem Zustand praktisch nichts.

Der Testzyklus wird nun durch ein Ausgangssignal CD der Überwachungs- und Steuerschaltung 4' gestartet. Mit Hilfe des Transistors 5 wird durch dieses Signal CD der Anschluß D der signalverarbeitenden Schaltung 2 (siehe Fig. 1) bzw. der Filterschaltung 3 an Masse (GND) geschaltet, nämlich zum Zeitpunkt t₀. Nach einer kurzen Einschwingzeit stellt sich an dem zweiten Anschluß dieser signalverarbeitenden Schaltung 2, nämlich an dem Anschluß C, ein bestimmtes Gleichspannungspotential ein, dessen Höhe von der Versorgungsspannung V_{CC} und durch den Spannungsteiler R3,R4 vorgegeben ist. Zum Zeitpunkt t₁ wird durch ein Signal CB, das den Transistor 6 ansteuert und zum Schließen dieses symbolisch dargestellten Halbleiterschalters führt, das Potential an dem Anschluß C auf das Niveau der Energieversorgung der Quelle V_{CC} angehoben.

Der eigentliche, zur Bestimmung der Induktivität und zur Kurzschlußerkennung geeignete Meßvorgang beginnt zum Zeitpunkt t₂, der die Beendigung des Ansteuersignales CB und damit das Abschalten der Stromquelle V_{CC} von dem Anschluß C markiert. Die während des Anstehens des Signals CB, also zwischen den Zeitpunkten t₁ und t₂, in der Induktivität LS gespeicherte Energie führt nämlich nach dem "Öffnen" des Schalters 6 zunächst zu einer Fortsetzung des Stromes IL und dadurch zur Beeinflussung des Potentialverlaufs an den Anschluß bzw. Eingang C. Der Strom IL durch den induktiven Schaltkreis läßt sich im statischen Zustand, d.h. nach dem Ansteuern des Schalters 6 (Signal CB) und Abklingen der Einschwingvorgänge, aus den ohmschen Widerständen R1,R2,RS,R3 und R4 errechnen.

Eine Besonderheit des vorliegenden Ausführungsbeispiels besteht darin, daß nach dem Unterbrechen der Verbindung des Eingangs C mit Spannungsquelle V_{CC} über den Halbleiterschalter 6 der Eingang C für eine sehr kurze Zeitspanne dt₃ an Masse geschaltet wird. Dies geschieht durch Ansteuerung des Schalters 7 mit Hilfe eines Signals CC. Durch diese Maßnahme wird erreicht, daß der Kondensator C1 sehr schnell vollständig entladen wird. Der Strom IL durch die Induktivität LS bleibt während dieser kurzen Zeitspanne praktisch konstant.

Nach der kurzen Zeitspanne dt₃ bestimmt der Ladevorgang C1 den Potentialverlauf am Anschluß C. Da am Punkt B noch höheres Potential liegt als am Punkt A, entlädt sich C2 über den Widerstand RS der induktiven Schaltung so lange, bis das Potential an den Punkten A und B gleich ist. Unterstützt wird diese Entladung durch den weiterhin fließenden, durch die Induktivität LS hervorgerufenen Strom IL sowie durch den nun einsetzenden Ladestrom des Kondensators C1. Dadurch wird das Potential am Punkt B sehr schnell kleiner als das Potential am Punkt A, wodurch sich die Aufladung von C1 verzögert. Nach Abklingen des Stromes IL, der durch die in der Induktivität gespeicherte Energie hervorgerufen wird, ergibt sich schließlich ein gleiches Potential an den Anschlüssen A und B.

Die zuvor beschriebenen Vorgänge stellen sich jedoch nur bei intaktem Sensor 1 ein. Liegt ein Kurzschluß (oder eine Leitungsunterbrechung) vor, wird der Kondensator C1 sehr viel schneller aufgeladen. Dies ist durch Beobachtung und Auswertung des Potentialverlaufs an dem Anschluß C erkennbar. Dies veranschaulichen die Diagramme in Fig. 3. Die drei oberen Diagramme zeigen den Signalverlauf an den Klemmen CD,CB und CC. Bei Anstehen eines Ansteuersignals ("1") sind die durch die Transistoren 5,6 und 7 realisierten Schalter geschlossen.

Der Potentialverlauf am Anschluß C ist ebenfalls in Fig. 3 wiedergegeben. Das Potential V_{Cstat} stellt sich nach Ansteuerung des Transistors 5 bzw. Anschalten des Ausgangs D der signalverarbeitenden Schaltung 2 an Masse ein. Mit V_{Ct4} ist das Potential bezeichnet, das sich bei intaktem Sensor bzw. Sensoranschluß - wenn kein Fehler vorhanden ist - zum Meßzeitpunkt t₄ einstellt. Das Zeitintervall T ist in Abstimmung mit der Induktivität LS des Sensors 1 so gewählt, daß nach dem Ablauf dieser Zeitspanne T bezogen auf den Puls dt₃, also zum Zeitpunkt t₄, der Einschwingvorgang noch nicht beendet und sich bei intaktem Sensor, d.h. wenn kein Kurzschluß und keine Leitungsunterbrechung vorhanden sind, in etwa die maximale Abweichung V des Potentials am Ausgang C von dem statischen Potential V_{Cstat} einstellt. Liegt ein Defekt vor, ist zum Zeitpunkt t₄ die Aufladung des Kondensators C1 längst beendet und das Potential an dem Anschluß C auf den Wert von V_{Cstat} angestiegen. Die gepunktete Linie des Potentialverlaufs V_{C} in Fig. 3 veranschaulicht die Verhältnisse beim Vorliegen eines Kurzschlusses oder einer Leitungsunterbrechung.

Der Vollständigkeit halber sei noch darauf hingewiesen, daß eine Zeitdifferenz (t₀ -t₁) zwischen dem Hervorrufen der Signale CD und CB entbehrlich ist, wenn anschließend, d.h. vor der Beendigung des Signales CB und dem nahezu gleichzeitigen Anlegen des kurzzeitigen Signals CC, das Einschwingen und damit das Einstellen statischer Verhältnisse abgewartet wird.

Modifikationen der beschriebenen Schaltungsanordnung und der Ansteuerung im Vergleich zu dem Ausführungsbeispiel nach den Figuren 2 und 3 sind denkbar. Wesentlich ist in jedem Fall, daß sich die in der Induktivität des Sensors 1 gespeicherte Energie auf den Potentialverlauf an einem Ausgang der Filterschaltung 3 bzw. an einem Anschluß der signalverarbeitenden Schaltung 2 auswirkt und zur Überwachung ausgewertet wird.

## Patentansprüche

1. Schaltungsanordnung zur Überwachung einer induktiven Schaltung, die als Bestandteil einer signalverarbeitenden Schaltung (2) oder als Zusatz (4,4') zu dieser Schaltung ausgebildet und über eine hochohmige Eingangs- oder Filterschaltung (3) an die signalverarbeitende Schaltung (2) angeschlossen ist und die beim Eintreten vorgegebener Bedingungen und/oder in vorgegebenen Intervallen einen Testzyklus zur Bestimmung der Induktivität der zu überwachenden Schaltung (1), einschließlich der Filterschaltung (3) auslöst, dadurch **gekennzeichnet,** daß zu Beginn des Testzyklus einer der beiden Ausgänge (D) der Filterschaltung (3) an Masse (GND), der zweite Ausgang (C) für eine vorgegebene Zeitspanne an eine Spannungsquelle (V_{CC}) angeschaltet werden und daß die Induktivität aus dem Potentialverlauf an einem Ausgang (C) der Filterschaltung (3) ermittelt wird.

2. Schaltungsanordnung nach Anspruch 1, dadurch **gekennzeichnet,** daß die vorgegebene Zeitspanne mindestens der Einschwingzeit der zu überwachenden induktiven Schaltung (1), einschließlich der Filterschaltung (3), entspricht und daß nach Beendigung der vorgegebenen Zeitspanne und Abschaltung der Spannungsquelle (V_{CC}) der Potentialverlauf an dem zweiten Ausgang (C) zur Ermittlung der Induktivität ausgewertet wird.

3. Schaltungsanordnung nach Anspruch 2, dadurch **gekennzeichnet,** daß die Filterschaltung symmetrisch aufgebaut ist und je einen hochohmigen Serienwiderstand (R1,R2) in den von der induktiven Schaltung (1) zu der signalverarbeitenden Schaltung (2) führenden Leitungen, einen beide Ausgänge (C,D) der Filterschaltung (3) verbindenden Kondensator (C1) und je einen einen Eingang (A,B) der Filterschaltung (3) mit Masse verbindenden Eingangskondensator (C2,C3) aufweist.

4. Schaltungsanordnung nach Anspruch 3, dadurch **gekennzeichnet,** daß der Filterschaltung (3) über einen Spannungsteiler (R3,R4), der einseitig an eine Gleichspannungsquelle (V_{CC}), an der anderen Seite an Masse angeschlossen ist, ein Gleichspannungspotential vorgegeben ist.

5. Schaltungsanordnung nach Anspruch 3 oder 4, dadurch **gekennzeichnet,** daß diese einen Schaltkreis (Transistor 7, Signal CC) enthält, mit dem unmittelbar nach dem Abschalten der Spannungsquelle (V_{CC}) durch ein kurzzeitiges (dt₃) Anschalten dieses zweiten Ausgangs (C) der Filterschaltung (3) an Masse der Kondensator (C1), der beide Ausgänge (C,D) der Filterschaltung verbindet, entladen wird.

## Claims

1. A circuit for monitoring an inductive circuit which is formed as part of a signal-processing circuit (2) or as an additional element (4, 4') of this circuit and is connected to the signal-processing circuit (2) by way of a high-ohmic input circuit or filter circuit (3), and which monitoring circuit initiates a test cycle to determine the inductance of the circuit (1) to be monitored, including the filter circuit (3), if predetermined conditions apply and/or in predetermined intervals,
**characterized** in that, at the beginning of the test cycle, one of the two outputs (D) of the filter circuit (3) is connected to ground (GND), while the second output (C) is connected to a voltage source (V_{cc}) for a predetermined period of time, and in that the inductance is determined from the potential variation at an output (C) of the filter circuit (3).

2. A circuit as claimed in claim 1,
**characterized** in that the predetermined period of time corresponds at least to the transient time of the inductive circuit (1) to be monitored, including the filter circuit (3), and in that, upon lapse of the predetermined time period and disconnection of the voltage source (V_{cc}), the potential variation at the second output (C) is evaluated to determine the inductance.

3. A circuit as claimed in claim 2,
**characterized** in that the filter circuit is arranged symmetrically and has each one high-ohmic series resistor (R1, R2) in the lines leading from the inductive circuit (1) to the signal-processing circuit (2), one capacitor (C1) interconnecting both outputs (C, D) of the filter circuit (3), and each one input capacitor (C2, C3) which connects an input (A, B) of the filter circuit (3) to ground.

4. A circuit as claimed in claim 3,
**characterized** in that a d.c. voltage potential is set for the filter circuit (3) by means of a voltage divider (R3, R4) which is connected to a source of d.c. voltage (V_{cc}) on one side and to ground on the other side.

5. A circuit as claimed in claim 3 or claim 4,
**characterized** in that a circuit (transistor 7, signal CC) is provided, by means of which the capacitor (C1), interconnecting both outputs (C, D) of the filter circuit, is discharged immediately on disconnection of the voltage source (V_{cc}) by grounding the second output (C) of the filter circuit (3) for a short interval (dt₃).

## Revendications

1. Agencement de circuit permettant de surveiller un circuit inductif qui est réalisé en tant que partie constitutive d'un circuit (2) de traitement de signaux ou en tant qu'adjonction (4, 4') à ce circuit et est raccordé au circuit (2) de traitement de signaux par l'intermédiaire d'un circuit d'entrée ou de filtration (3) à valeur ohmique élevée et qui, lors de l'apparition de conditions préfixées et/ou à des intervalles préfixés, déclenche un cycle d'essai destiné à déterminer l'inductance du circuit (1) à surveiller, y compris le circuit de filtration (3), caractérisé en ce qu'au début du cycle d'essai, l'une (D) des deux sorties du circuit de filtration (3) est connectée à la masse (GND) et la seconde sortie (C) est connectée à une source de tension (V_{cc}) pendant un intervalle de temps préfixé et en ce que l'inductance est déterminée à partir de la variation de potentiel dans le temps sur une sortie (C) du circuit de filtration (3).

2. Agencement de circuit selon la revendication 1, caractérisé en ce que l'intervalle de temps préfixé est au moins égal au temps de réponse du circuit inductif (1) à surveiller, y compris le circuit de filtration (3), et en ce qu'après la fin de l'intervalle de temps préfixé et la mise hors circuit de la source de tension (V_{cc}), la variation de potentiel dans le temps sur la seconde sortie (C) est exploitée pour déterminer l'inductance.

3. Agencement de circuit selon la revendication 2, caractérisé en ce que le circuit de filtration a une structure symétrique et comprend une résistance en série (R1, R2) respective à valeur ohmique élevée dans chacune des lignes menant du circuit inductif (1) au circuit (2) de traitement de signaux, un condensateur (C1) reliant deux sorties (C, D) du circuit de filtration (3) et, pour chaque entrée (A, B) du circuit de filtration (3), un condensateur d'entrée (C2, C3) respectif reliant cette entrée à la masse.

4. Agencement de circuit selon la revendication 3, caractérisé en ce qu'un potentiel de tension continue est préfixé pour le circuit de filtration (3) par l'intermédiaire d'un diviseur de tension (R3, R4) qui est connecté d'un côté à une source de tension continue (V_{cc}) et de l'autre côté à la masse.

5. Agencement de circuit selon la revendication 3 ou 4, caractérisé en ce que cet agencement de circuit contient un circuit (transistor 7, signal CC) au moyen duquel le condensateur (C1) qui relie deux sorties (C, D) du circuit de filtration est déchargé, immédiatement après la mise hors circuit de la source de tension (V_{cc}), au moyen d'une brève connexion (dt₃) de cette seconde sortie (C) du circuit de filtration (3) à la masse.
